# EUROPEAN PATENT APPLICATION

(11) **EP 2 562 852 A2**
(43) Date of publication of application: **27.02.2013**
(21) Application number: 12193805.4
(22) Date of filing: 21.09.2010
(51) Int. Cl.: H01M 4/04, H01M 4/02

(54) **High performance electrodes**

(30) Priority: 22.09.2009 US 244826 P; 23.09.2009 US 245121 P
(62) Divisional of application: 10757551.6
(71) Applicant: G4 Synergetics, Inc., Roslyn, NY 11577 (US)
(72) Inventor: The designation of the inventor has not yet been filed
(74) Representative: Vossius & Partner

(57) **Abstract**

Techniques, arrangements and compositions are provided to incorporate nanostructured materials into electrodes for energy storage devices. Materials such as, for example, carbon nanotubes, silicon nanowires, silicon carbide nanowires, zinc nanowires, and other materials may be used to modify electrode properties such as electronic conductivity, thermal conductivity, or durability, for example. In some embodiments, nanostructured materials may be added to electrode formulations such as, for example, slurries or powders. Nanostructured materials may be deposited directly onto active material particles or electrode components. In some embodiments, coatings may be used to assist in deposition.

## Description

### Cross-Reference to Related Applications

This application claims the benefit of United States Provisional Application No. 61/244,826 filed September 22, 2009, and United States Provisional Application No. 61/245,121 filed September 23, 2009, which are both hereby incorporated by reference herein in their entireties.

### Field of the Invention

The present invention relates to forming electrodes, and more particularly to techniques for forming electrodes containing nanostructured materials.

### Background of the Invention

Electrodes are used to supply and remove electrons from some medium, and are typically manufactured from metals or metal alloys. Electrochemical cells use electrodes to facilitate electron transport and transfer during electrochemical interactions. Batteries, or electrochemical storage devices, may use electrodes in both galvanic and electrolytic capacities, corresponding to discharging or charging processes, respectively. Electrochemical reactions generally occur at or near the interfaces of an electrolyte and the electrodes, which may extend to an external circuit through which electric power can be applied or extracted. Electrodes are typically placed in contact with current collectors in order to draw and/or supply electrical power.

Mechanical and chemical processes are typically used to manufacture electrodes that feature desired performance metrics such as charging/discharging rates or cycle life. These performance metrics often depend on the materials that are used. Moreover, some electrochemical materials undergo volumetric change during charging or discharging processes. For example, the volumetric change between some active materials may be as much as several hundred percent. This may impart substantial stresses and strains on the electrodes. Repeated volumetric changes of these active materials may lead to pulverization and reduced electrode cycle life.

### Summary of the Invention

In view of the foregoing, techniques, compositions, and arrangements are provided for incorporating nanostructured materials into electrodes. In some embodiments, nanostructured materials are added to slurries or other mixtures to form electrodes. In some embodiments, nanostructured materials are deposited directly onto surfaces of electrode components. In some approaches, the use of nanostructured materials in electrodes may modify properties of electrodes. For example, in some embodiments, carbon nanotubes may be incorporated into electrodes to increase electronic conductivity, thermal conductivity, durability, any other suitable property or suitable combination of properties thereof. Moreover, in some approaches, the use of nanostructured materials in electrodes may reduce volumetric changes during charging and discharging.

In some embodiments, a slurry may be prepared by combining one or more active materials, electronically conductive materials, binders, liquid agents, or other suitable materials or suitable combinations thereof. One or more of the components of the slurry may be a nanostructured material including nanostructured elements such as, for example, nanoparticles (*e.g*., Li*M*PO₄, Li*M*O₂, in which "*M*" is any suitable metal), nanowires (*e.g*., silicon nanowires, zinc nanowires), single-walled or multi-walled nanotubes (*e.g*., carbon nanotubes), closed fullerenes (*e.g*., C60 buckminsterfullerene), any other suitable nanostructured elements, any suitable nanostructured composite elements or any suitable combinations or arrays thereof. The slurry may be placed in contact with or otherwise applied to an electrode component such as, for example, a metalized foam, substrate, any other electrode component or subassembly of components, or any suitable combinations thereof. At least one substantially contiguous layer of the slurry may be formed on one more surfaces of the electrode component. The layers may be uniform or non-uniform in thickness and may be contiguous or non-contiguous on the one or more surfaces of the electrode component. In some embodiments, more than one contiguous layer may be formed on a particular surface of the electrode component. The slurry may be dried on the electrode component, forming an electrode. Drying may require substantially all (*i.e*., all or almost all) of the liquid agent to be removed from the at least one contiguous layer of the slurry to leave a solid material, which may remain in contact with the surface of the electrode component. The electrode may be sized, calendared, treated, or otherwise processed before or after drying.

In some embodiments, a plurality of active material particles may be modified with one or more nanostructured materials. Active material particles may be coated with any suitable material such as, for example, iron (Fe), aluminum (Al), alumina (Al₂O₃), manganese salts, magnesium salts, silicon (Si), any other suitable material or any suitable combination thereof, to aid in forming nanostructures on the active material particles. Deposition techniques (*e.g*., chemical vapor deposition, physical vapor deposition, electrophoresis) may be used to form nanostructured materials on coated active materials. The deposition technique may include introducing a precursor such as, for example, hydrocarbons, hydrogen, silanes (*e.g*., SiH₄), inert species, or other suitable precursors or mixtures thereof, to the coated particles. Nanostructured materials may include arrays of nanostructured elements such as, for example, nanoparticles (*e.g*., LiFePO₄ nanoparticles), nanowires (*e.g*., silicon nanowires, zinc nanowires), single-walled or multi-walled nanotubes (*e.g*., carbon nanotubes), closed fullerenes, any other suitable nanostructured elements, any suitable nanostructured composite elements or any suitable combinations thereof. Active material particles that have been modified by deposition of nanostructured materials may be included in a slurry, which may be applied to an electrode component and dried to form an electrode.

In some embodiments, an electrode component may be modified with one or more nanostructured materials. Electrode components may be coated with any suitable material, or combinations of materials, which may act as a catalyst for deposition of nanostructured materials. Deposition techniques (*e.g*., chemical vapor deposition, physical Vapor deposition, electrophoresis) may be used to form nanostructured materials on coated electrode components. The deposition technique may include introducing a precursor such as, for example, hydrocarbons, hydrogen, silanes (*e.g*., SiH₄) , inert species, or other suitable precursors or mixtures thereof, to the coated electrode component. Nanostructured materials may include arrays of nanostructured elements such as, for example, nanoparticles (*e.g*., LiFePO₄ nanoparticles), nanowires (*e.g*., silicon nanowires, zinc nanowires), single-walled or multi-walled nanotubes (*e.g*., carbon nanotubes), closed fullerenes, any other suitable nanostructured elements, any suitable nanostructured composite elements or any suitable combinations thereof. Active materials may be added to electrode components that have been modified by deposition of nanostructured materials. In some embodiments, active materials may be included in a slurry that is applied to an electrode component and dried to form an electrode. Active materials may be added before or after modification of the electrode component.

### Brief Description of the Drawings

The above and other objects and advantages of the invention will be apparent upon consideration of the following detailed description, taken in conjunction with the accompanying drawings, in which like reference characters refer to like parts throughout, and in which:

FIG. 1 shows a schematic cross-sectional view of an illustrative structure of a bi-polar electrode unit (BPU) in accordance with some embodiments of the present invention;

FIG. 2 shows a schematic cross-sectional view of an illustrative structure of a stack of BPUs of FIG. 1 in accordance with some embodiments of the present invention;

FIG. 3 shows a schematic cross-sectional view of an illustrative structure of a mono-polar electrode unit (MPU) in accordance with some embodiments of the present invention;

FIG. 4 shows a schematic cross-sectional view of an illustrative structure of a device containing two MPUs of FIG. 3 in accordance with some embodiments of the present invention;

FIG. 5 shows a diagram of illustrative transport processes at an active interface in accordance with some embodiments of the present invention;

FIG. 6 shows an illustrative partial cross-section schematic view of an active interface region in accordance with some embodiments of the present invention;

FIG. 7 shows an illustrative electrode structure with a cutaway section in accordance with some embodiments of the present invention;

FIG. 8 shows side elevation views of two illustrative electrode structures in accordance with some embodiments of the present invention;

FIG. 9 shows an illustrative diagram of nanostructured materials in accordance with some embodiments of the present invention;

FIG. 10 shows an illustrative diagram of nanostructured materials in accordance with some embodiments of the present invention;

FIG. 11 is a flow diagram of illustrative steps for forming electrodes in accordance with some embodiments of the present invention;

FIG. 12 is a flow diagram of illustrative steps for forming electrodes in accordance with some embodiments of the present invention;

FIG. 13 is a flow diagram of illustrative steps for forming modified particles in accordance with some embodiments of the present invention;

FIG. 14 is a flow diagram of illustrative steps for forming electrodes in accordance with some embodiments of the present invention;

FIG. 15 is a flow diagram of illustrative steps for forming electrodes in accordance with some embodiments of the present invention;

FIG. 16 shows an illustrative side elevation view of a slurry in contact with a substrate in accordance with some embodiments of the present invention;

FIG. 17 shows an illustrative top plan view of the elements of FIG. 16, taken from line XVII-XVII, in accordance with some embodiments of the present invention;

FIGS. 18 and 19 show illustrative particles undergoing modification in accordance with some embodiments of the present invention;

FIG. 20 shows an illustrative side elevation view of an electrode component in contact with a substrate in accordance with some embodiments of the present invention;

FIG. 21 shows an illustrative top plan view of the elements of FIG. 20, taken from line XXI-XXI, in accordance with some embodiments of the present invention; and

FIG. 22 shows several illustrative partial cross-sectional views of an electrode component in accordance with some embodiments or the present invention.

### Detailed Description of the Invention

The present invention provides techniques, compositions, and arrangements for forming electrodes and electrode structures that include nanostructured materials. In some embodiments, the nancstructured materials may be formed directly on electrodes or electrode components. The nanostructured materials may be active materials, electronically conducting materials, any other suitable materials or any suitable combinations thereof for use in energy storage devices (ESDs). The electrode structures and assemblies of the present invention may be applied to energy storage devices such as, for example, batteries, capacitors or any other energy storage device which may store or provide electrical energy or current, or any combination thereof. For example, the electrode structures and assemblies of the present invention may be implemented in a mono-polar electrode unit (MPU) or a bi-polar electrode unit (BPU), and may be applied to one or more surfaces of the MPU or BPU. It will be understood that while the present invention is described herein in the context of stacked energy storage devices, the concepts discussed are applicable to any intercellular electrode configuration including, but not limited to, parallel plate, prismatic, folded, wound and/or bipolar configurations, any other suitable configurations or any combinations thereof.

In some embodiments, electrodes may contain nanostructured materials to increase active interface area, and to improve transport of molecules (*e.g*., water), ions (*e.g*., hydroxyl anions), electrons, or any combination thereof to the interface area. For example, carbon nanotubes (CNTs) may be added to electrodes to increase active interface area and improve electronic conductivity. Electrochemical reactions may occur at or near the interface area between an active material, an electrolyte and an electronically conducting component. Increased interface area may allow increased charge or discharge rates for electrochemical devices.

In some embodiments, electrodes may contain nanostructured materials to reduce volumetric changes during charging and discharging. Active materials may be nanostructured to reduce material stresses and strains that may develop from volumetric changes. For example, silicon nanowires (SiNWs) may be used as an active material (*e.g*., negative electrode material) in a lithium-ion ESD to reduce volumetric changes during lithium uptake, removal, or both. In some embodiments, electrodes containing SiNWs as an active material may undergo reduced volumetric change as a result of relative motion of the nanostructured material.

The present invention includes techniques, compositions, and arrangements for forming electronically conductive electrodes that include nanostructured materials. In some embodiments, the electrodes may be formed, for example, by combining nanostructured materials, or materials with nanostructured features, into a slurry which may applied to an electrode component, such as an electronically conductive substrate or metalized foam, for example, and dried. In some embodiments, materials may be modified, for example, by depositing nanostructured materials onto suitable surfaces of materials, particles, components, other surfaces, or combinations of surfaces. In some embodiments, the electrodes may be formed, for example, by depositing nanostructured materials onto the surfaces of electrode components such as electronically conductive substrates or metalized foams, or other suitable components or combinations of components. Active materials may be introduced to the electrodes or electrode components before, after, or during deposition of nanostructured materials.

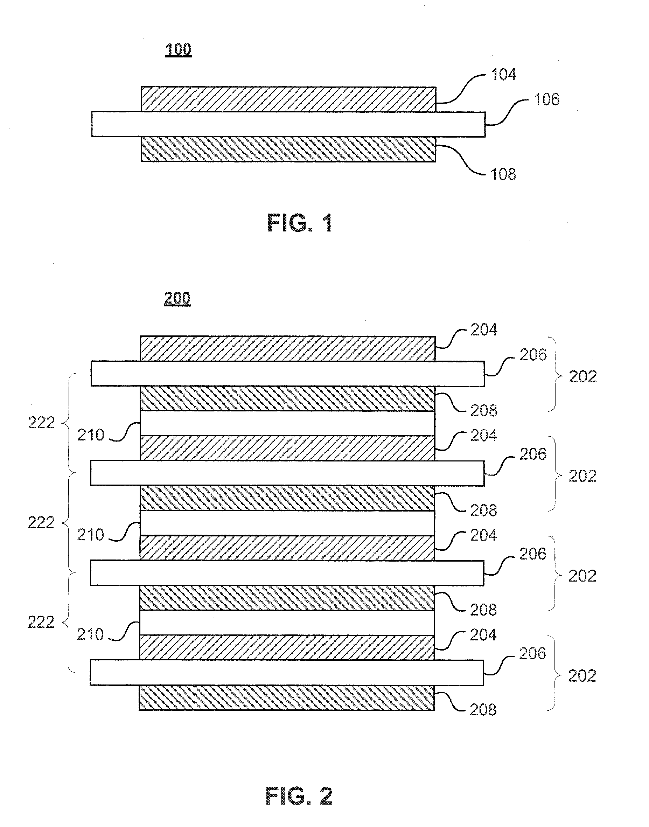

The invention will now be described in the context of FIGS. 1-22, which show illustrative embodiments.

FIG. 1 shows a schematic cross-sectional view of an illustrative structure of BPU 100 in accordance with some embodiments of the present invention. Exemplary BPU 100 may include a positive active material electrode layer 104, an electronically conductive, impermeable substrate 106, and a negative active material electrode layer 108. Positive electrode layer 104 and negative electrode layer 108 are provided on opposite sides of substrate 106.

FIG. 2 shows a schematic cross-sectional view of an illustrative structure of a stack 200 of BPUs 100 of FIG. 1 in accordance with some embodiments of the present invention. Multiple BPUs 202 may be arranged into stack configuration 200. Within stack 200, electrolyte layer 210 may be provided between two adjacent BPUs, such that positive electrode layer 204 of one BPU is opposed to negative electrode layer 208 of an adjacent BPU, with electrolyte layer 210 positioned between the BPUs. A separator may be provided in one or more electrolyte layers 210 to electrically separate opposing positive and negative electrode layers. The separator allows molecular and ionic transfer between the adjacent electrode units, but may substantially prevent electronic transfer between the adjacent electrode units. As defined herein, a "cell" or "cell segment" 222 refers to the components included in substrate 206 and positive electrode layer 204 of a first BPU 202, negative electrode layer 208 and substrate 206 of a second BPU 202 adjacent to the first BPU 202, and electrolyte layer 210 between the first and second BPUs 202. Each impermeable substrate 206 of each cell segment 222 may be shared by applicable adjacent cell segment 222.

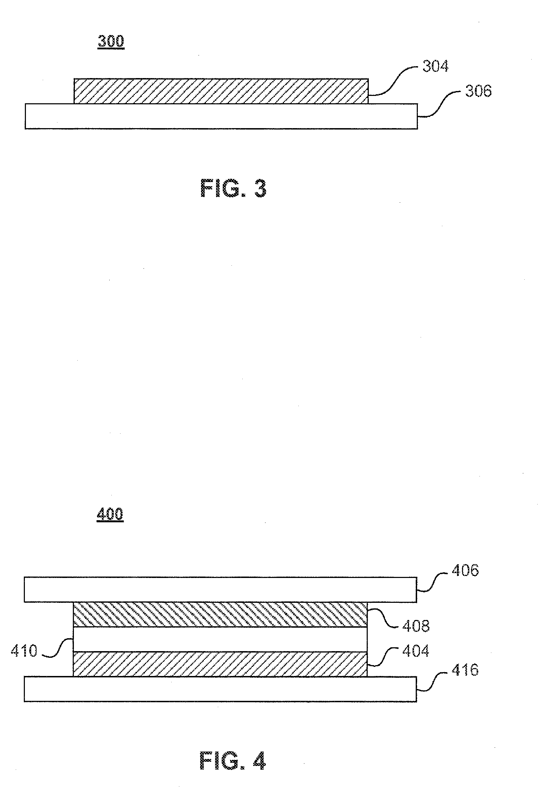

FIG. 3 shows a schematic cross-sectional view of an illustrative structure of MPU 300 in accordance with some embodiments of the present invention. Exemplary MPU 300 may include active material electrode layer 304 and electronically conductive, impermeable substrate 306. Active material layer 304 may be any suitable positive or negative active material.

FIG. 4 shows a schematic cross-sectional view of an illustrative structure of a device containing two MPUs of FIG. 3 in accordance with some embodiments of the present invention. Two MPUs 300 having a positive and negative active material, respectively, may be stacked to form electrochemical device 400. Electrolyte layer 410 may be provided between two MPUs 300, such that positive electrode layer 404 of one MPU 300 is opposed to negative electrode layer 408 of the other MPU 300, with electrolyte layer 410 positioned between the MPUs. A separator may be provided electrolyte layers 410 to electrically separate opposing positive and negative electrode layers. Although not shown, in some embodiments two MPUs having positive and negative active materials, respectively, may be added to stack 200 of FIG. 2, along with suitable layers of electrolyte, to form a bi-polar energy storage device. Bi-polar ESDs and ESD stacks are discussed in more detail in Ogg et al. U.S. Patent No. 7,794,877, Ogg et al. U.S. Patent Application No. 12/069,793, and West et al. U.S. Patent Application No. 12/258,854, all of which are hereby incorporated by reference herein in their entireties.

The substrates used to form electrode units (*e.g*., substrates 106, 206, 406, and 416) may be formed of any suitable electronically conductive and impermeable or substantially impermeable material, including, but not limited to, a non-perforated metal foil, aluminum foil, stainless steel foil, cladding material including nickel and aluminum, cladding material including copper and aluminum, nickel plated steel, nickel plated copper, nickel plated aluminum, gold, silver, any other suitable electronically conductive and impermeable material or any suitable combinations thereof. In some embodiments, substrates may be formed of one or more suitable metals or combination of metals (*e.g*., alloys, solid solutions, plated metals). Each substrate may be made of two or more sheets of metal foils adhered to one another, in certain embodiments. The substrate of each BPU may typically be between 0.025 and 5 millimeters thick, while the substrate of each MPU may be between 0.025 and 30 millimeters thick and act as terminals or sub-terminals to the ESD, for example. Metalized foam, for example, may be combined with any suitable substrate material in a flat metal film or foil, for example, such that resistance between active materials of a cell segment may be reduced by expanding the conductive matrix throughout the electrode.

The positive electrode layers provided on the substrates to form the electrode units of the invention(*e.g*., positive electrode layers 104, 204 and 404) may be formed of any suitable active material, including, but not limited to, nickel hydroxide (Ni(OH)₂), nickel oxyhydroxide (NiOOH), zinc (Zn), lithium iron phosphate (LiFePO₄), lithium manganese phosphate (LiMnPO₄), lithium cobalt oxide (LiCoO₂), lithium manganese oxide (LiMnO₂), any other suitable material, or combinations thereof, for example. The positive active material may be sintered and impregnated, coated with a suitable binder (*e.g*., aqueous, non-aqueous, organic, inorganic) and pressed, or contained by any other suitable technique for containing the positive active material with other supporting chemicals in a conductive matrix. The positive electrode layer of the electrode unit may have particles, including, but not limited to, metal hydride (MH), palladium (Pd), silver (Ag), any other suitable material, or combinations thereof, infused in its matrix to reduce swelling, for example. This may increase cycle life, improve recombination, and reduce pressure within the cell segment, for example. These particles, such as MH, may also be in a bonding of the active material paste, such as Ni(OH)₂, to improve the electrical conductivity within the electrode and to support recombination.

The negative electrode layers provided on the substrates to form the electrode units of the invention (*e.g*., negative electrode layers 108, 208, and 408) may be formed of any suitable active material, including, but not limited to, MH, cadmium (Cd), manganese (Mn), Ag, carbon (C), silicon (Si), silicon-carbon composites, silicon carbide (SiC), any other suitable material, or combinations thereof, for example. The negative active material may be sintered, coated with an aqueous binder and pressed, coated with an organic binder and pressed, or contained by any other suitable technique for containing the negative active material with other supporting chemicals in a conductive matrix, for example. The negative electrode side may have chemicals including, but not limited to, Ni, Zn, Al, any other suitable material, or combinations thereof, infused within the negative electrode material matrix to stabilize the structure, reduce oxidation, and extend cycle life, for example.

Various suitable binders, including, but not limited to, organic carboxymethylcellulose (CMC), Creyton rubber, PTFE (Teflon), polyvinylidene fluoride (PVDF), any other suitable material or any suitable combinations thereof, for example, may be mixed with or otherwise introduced to the active material to maintain contact between the active material and a substrate, solid-phase foam, any other suitable component, or any suitable combination thereof. Any suitable binders may be included in slurries or any other mixtures to increase adherence, cohesion or other suitable property or combination thereof. In some embodiments, n-methyl-2-pyrrolidone (NMP) may be used as liquid agent (*e.g*., a solvent) in slurries.

The separator of each electrolyte layer of an ESD may be formed of any suitable material that electrically isolates its two adjacent electrode units while allowing ionic transfer between those electrode units. The separator may contain cellulose super absorbers to improve filling and act as an electrolyte reservoir to increase cycle life, wherein the separator may be made of a polyabsorb diaper material, for example. The separator may, thereby, release previously absorbed electrolyte when charge is applied to the ESD. In certain embodiments, the separator may be of a lower density and thicker than normal cells so that the inter-electrode spacing (IES) may start higher than normal and be continually reduced to maintain the capacity (or C-rate) of the ESD over its life as well as to extend the life of the ESD.

The separator may be a relatively thin material bonded to the surface of the active material on the electrode units to reduce shorting and improve transport mechanics. This separator material may be sprayed on, coated on, pressed on, or combinations thereof, for example. The separator may have a recombination agent attached thereto. This agent may be infused within the structure of the separator (*e.g*., this may be done by physically trapping the agent in a wet process using a polyvinyl alcohol (PVA or PVOH) to bind the agent to the separator fibers, or the agent may be put therein by electro-deposition), or it may be layered on the surface by vapor deposition, for example. The separator may be made of any suitable material such as, for example, polypropylene, polyethylene, any other suitable material or any combinations thereof. The separator may include an agent that effectively supports recombination, including, but not limited to, lead (Pb), Ag, platinum (Pt), Pd, any other suitable material, or any suitable combinations thereof, for example. In some embodiments, an agent may be substantially insulated from (*e.g*., not contact) any electronically conductive component or material. For example, the agent may be positioned between sheets of the separator material such that the agent does not contact electronically conductive electrodes or substrates. While the separator may present a resistance if the substrates of a cell move toward each other, a separator may not be provided in certain embodiments of the invention that may utilize substrates stiff enough not to deflect.

The electrolyte of each electrolyte layer of an ESD may be formed of any suitable chemical compound that may ionize when dissolved or molten to produce an electrically conductive medium. The electrolyte may be a standard electrolyte of any suitable ESD, including, but not limited to, NiMH and lithium-ion ESDs, for example. The electrolyte in a lithium-ion based ESD may include, for example, ethylene carbonate (C₃H₄O₃), diethyl carbonate (C₅H₁₀O₃), lithium hexafluorophosphate (LiPF₆), any other suitable lithium salt, any other organic solvent, any other suitable material or any suitable combination thereof. The electrolyte in a NIGH based ESD may be, for example, an aqueous solution. The electrolyte may contain additional suitable materials, including, but not limited to, lithium hydroxide (LiOH), sodium hydroxide (NaOH), calcium hydroxide (CaOH), potassium hydroxide (KOH), any other suitable metal hydroxide, any other suitable material, or combinations thereof, for example. The electrolyte may also contain additives to improve recombination, including, but not limited to, Pt, Pd, any suitable metal oxides (*e.g*., Ag₂O), any other suitable additives, or any combination thereof, for example. The electrolyte may also contain rubidium hydroxide (RbOH), or any other suitable material, for example, to improve low temperature performance. The electrolyte may be frozen within the separator and then thawed after the ESD is completely assembled. This may allow for particularly viscous electrolytes to be inserted into the electrode unit stack of the ESD before the gaskets have formed substantially fluid tight seals with the electrode units adjacent thereto.

Electrodes may contain an electronically conductive network or component. The electronically conductive network or component may be an electronically conductive foam (*e.g*., metal-plated foam), collection of contacting electronically conductive particles (*e.g*., sintered metal particles), array of nanostructured material (*e.g*., array of CNTs), any other electronically conductive material, component, or network, or any suitable combinations thereof. The electronically conductive network or component may reduce ohmic resistance and may allow increased interface area for electrochemical interactions. For example, in stack 400 shown in FIG. 4, the interface between electrolyte 410 and positive electrode layer 404, and the interface between electrolyte 410 and negative electrode layer 408, appear to be a planar, two dimensional surfaces. While a planar interface may be employed in some embodiments of energy storage devices, the electrode may also have porous structure with substantially three-dimensional surface. The porous structure may increase the interface area between electrode and electrolyte, which may therefore increase the achievable charge or discharge rate. Active materials may be mixed with or applied to the conductive component or network to extend the interface over a greater surface area. Electrochemical interactions may occur at the interface between an active material, an electrolyte, and an electronically conductive material.

The electronically conductive substrate may be impermeable, preventing leakage or short circuiting for example. In some arrangements, one or more porous electrodes may be maintained in contact with a substrate, as shown in FIGS. 1-4. This arrangement may allow for electronic transfer among an external circuit and the electrode.

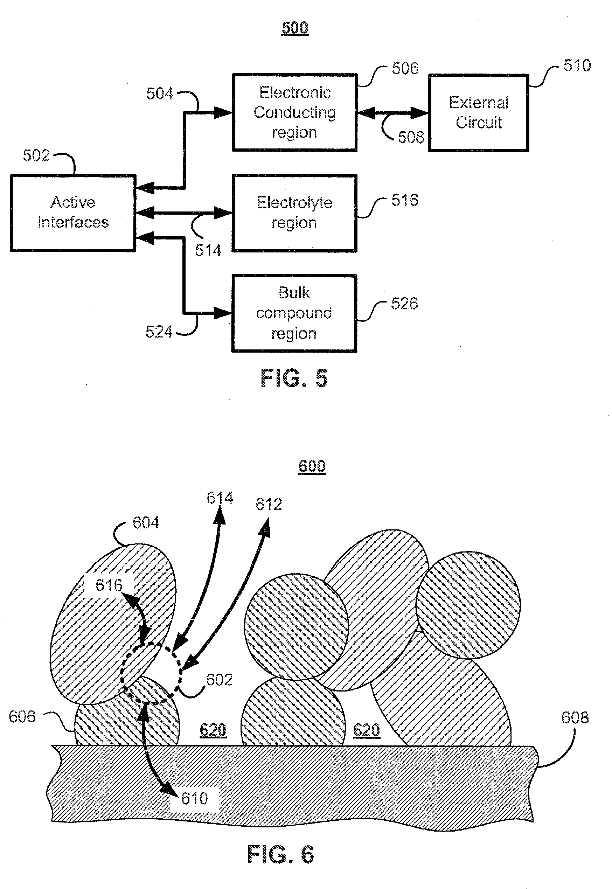

FIG. 5 shows illustrative transport diagram 500 in accordance with some embodiments of the present invention. Electrons, ions, and molecules may be transported to and from active interface 502, located at the intersection of an active material, electronically conductive material, and an electrolyte phase. The charge and discharge rate of ESDs may increase as the area of active interface 502 increases. Active interface 502 may represent the active surface area of active materials within ESDs. Electrochemical reactions may occur at active interface 502. In some embodiments, nanostructured materials may increase the active surface area, thereby increasing charge and discharge rates. Nanostructured materials may, for example, increase transport rates by increasing active surface area. In some embodiments, the use of nanostructured materials may improve electrode performance by improving properties such as, for example, electronic conductivity, thermal conductivity, durability, any other suitable property or any suitable combinations thereof.

Electrons may be transported between electronically conductive region 506 (*e.g*., metalized foam, substrate 106, 206, 306, 406, or 416) and active interface 502 along path 504, which may represent a path through a contiguous, electronically conductive material or combination of materials. Conduction electrons may be transported between electronically conductive region 506 and external circuit 510 along path 508, which may represent a path through a contiguous, electronically conductive material or combination of materials (*e.g*., metal wires, circuitry). Ions (*e.g*., hydroxyl anion, lithium cation) may undergo transport (*e.g*., migration, diffusion) between electrolyte region 516 (*e.g*., electrolyte 210, 410) and active interface 502 along path 514, which may represent a path through a substantially contiguous electrolyte material which may be solid or liquid. For example, during charging or discharging of lithium-ion-based ESDs, lithium cations may be transported through an electrolyte to and from active interfaces by diffusion, migration, or both. Compounds may undergo transport between bulk compound region 526 (*e.g*., bulk active material, bulk electrolyte, bulk gas phase) and active interface 502 along path 524, which may represent a path through a substantially contiguous medium or combination of mediums which may allow suitable molecular transport (*e.g*., electrolyte, active materials). For example, during charging or discharging of NiMH-based ESDs, water may diffuse to and from active interfaces due to concentration gradients in an aqueous electrolyte. In some embodiments, electrons, ions, compounds, or suitable combinations thereof, may undergo transport within the same material (*e.g*., mixed conductor) or suitable combination of materials.
The term "bulk" as used herein shall refer to regions of material away from nano-scale interfaces or nanostructures (*e.g*., reservoirs, non-nanostructured materials). The term "active interface" as used herein shall refer to area or region in space at or near interfaces in which electrochemical reactions substantially occur. The term "transport" as used herein shall refer to net spatial movement of electrons, ions, atoms, molecules, particles, or collections and combinations thereof, in response to gradients in physical quantities (*e.g*., pressure, concentration, temperature, electronic potential, chemical potential), including phenomenon such as diffusion, migration, convection, surface diffusion, and any other suitable mechanism.

FIG. 6 shows illustrative partial cross-sectional schematic view of interface region 600 in accordance with some embodiments of the present invention. Interface region 600 may include substrate 608, active material 604, electronically conductive material 606, and pore network 620. Active interface 602 (dotted region) may represent the area at or near the intersection of active material 604, electronically conductive material 606, and electrolyte (not shown, but which may substantially fill pore network 620). In some embodiments, active interface 602 may correspond to, or represent a close-up view of, active interface 502 described in FIG. 5. It will be understood that an illustrative, schematic two dimensional section representation of a three dimensional porous solid, such as that shown by FIG. 6, may not show some connectivity of the solids (or pores) but that connectivity may nonetheless exist.

Electrons may undergo transport between active interface 602, electronically conductive material 606 (*e.g*., electronic conduction region 506 of FIG. 5), and electronically conductive substrate 608 (*e.g*., electronic conduction region 506 of FIG. 5) via conduction path 610 (*e.g*., path 504 of FIG. 5). Ions may undergo transport between active interface 602 and the bulk electrolyte, which resides in pore network 620, via transport path 612 (e.g., path 514 of FIG. 5). For example, hydroxyl anions (OH⁻) may diffuse or migrate to and from active interface 602 via illustrative transport path 612 in pore network 620 which may be substantially filled with aqueous electrolyte. Any suitable ions, or combination of ions, in any suitable electrolyte may undergo transport along illustrative path 612. Compounds may undergo transport between active interface 602 and one or more of active material 604 (via transport path 616), bulk electrolyte (via path 614) which may reside in pore network 620, a gas phase region containing gaseous materials (not shown), any other material or region cf material, or any suitable combination thereof. For example, water molecules may undergo transport to and from active interface 602 via diffusion along illustrative path 614 in pore network 620 which may be substantially filled with aqueous electrolyte. Any suitable compounds, or combination of compounds, in any suitable medium may undergo transport along illustrative path 614. Transport paths 610, 612, and 614 are illustrative, and are meant to represent nominal paths by which transport may occur. It will be understood that the actual paths of electrons, ions, and compounds may not follow these illustrative paths. It will also be understood that an illustrative, schematic two dimensional section representation of a three dimensional porous solid, such as that shown by FIG. 6, may not show some connectivity of the solids (or pores) but that connectivity may nonetheless exist.

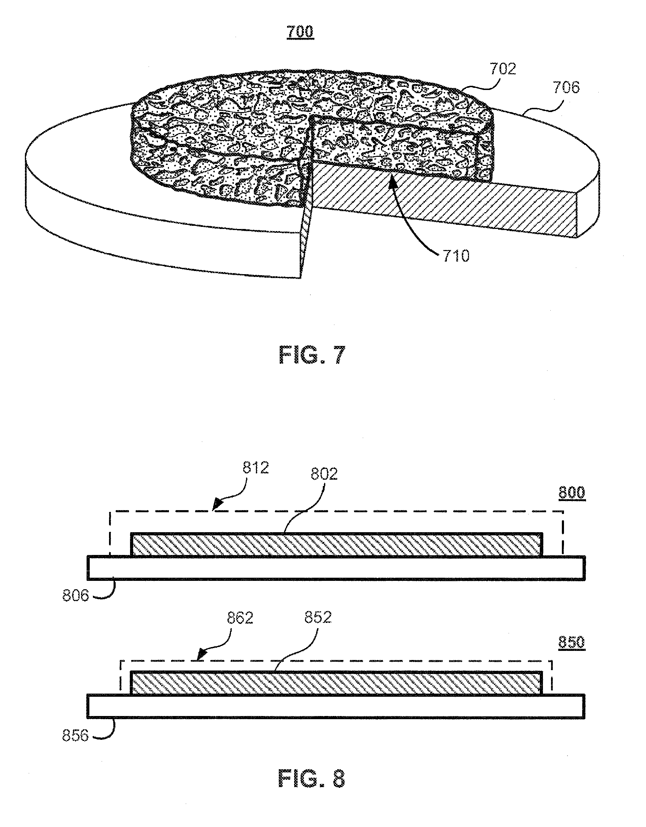

FIG. 7 shows illustrative electrode structure 700 with a cutaway section in accordance with some embodiments of the present invention. Electrode structure 700 may include porous electrode 702 and nonporous substrate 706. Electrode 702 and substrate 706 may share interface 710 as a plane of contact. Interface 610 represents the plane or path in space where at least two components, materials or suitable combination thereof meet in contact. The term "interface" as used herein describes the substantially planar area of contact between a slurry and a substrate, a solid foam and a substrate, any two suitable components, any suitable component and a non-solid phase, or any other plane of contact between two distinct materials or components. Although shown as a planar disk geometry, electrode structure 700 may have any suitable shape, curvature, thickness (of either layer), relative size (among substrate and foam), relative thickness (among substrate and foam), any other property or any suitable combination thereof. Electrode 702 may include one or more electronically conductive components (*e.g*., metals), one or more active materials (*e.g*., Ni(OH)₂, one or more binders, one or more nanostructured materials, any other suitable materials or any combination thereof. In some embodiments, active materials may be introduced to electrode 702 following assembly or creation of structure 700. In some embodiment, nanostructured materials may be introduced to electrode 702 following assembly or creation of structure 700.

Active materials may undergo significant volumetric expansion or contraction as a result of charging or discharging. The volumetric change may result from material phase transitions, intercalation of atoms or molecules within an active material, or other physical or chemical processes, or combinations thereof. For example, the volumetric change between active material silicon (Si) and lithium-silicon complexes (e.g., Li_{4.4}Si) formed from lithium insertion and removal may be several hundred percent.

FIG. 8 shows side elevation views of illustrative electrode structures 800 and 850 in accordance with some embodiments of the present invention. Illustrative electrode 802 of electrode structure 800 may undergo a volumetric change, which may result in a size increase to outline 812. Substrate 806 may not undergo substantial volumetric change, which may cause stresses and strains to develop during volumetric change of the electrode. Repeated expansion and contraction may lead electrode 802 to crumble or otherwise lose structural integrity. Repeated expansion and contraction may also lead electrode 802 to suffer reduced electronic conductivity, as the electronically conductive network in the electrode may be interrupted. Illustrative electrode 852 of electrode structure 850 may include nanostructured particles. The presence of nanostructured materials in electrode 852 may reduce volumetric changes of electrode 852 (as shown by outline 862), relative to electrode 802, during charging and discharging. The presence of nanostructured materials (e.g., carbon nanotubes, silicon nanowires) in electrode 852 may allow relative motion and volumetric changes amongst regions within electrode 852, which may reduce the stresses and strains that develop throughout electrode 852. In some embodiments, reduction of stresses and strains within an electrode may cause, for example, a reduction in deformation, cracking, pulverization, leaking, and any other failure modes or combinations thereof, of electrode components. In some embodiments, incorporation of a nanostructured material an electrode may improve the durability and cycle life of the electrode during charging and discharging processes.

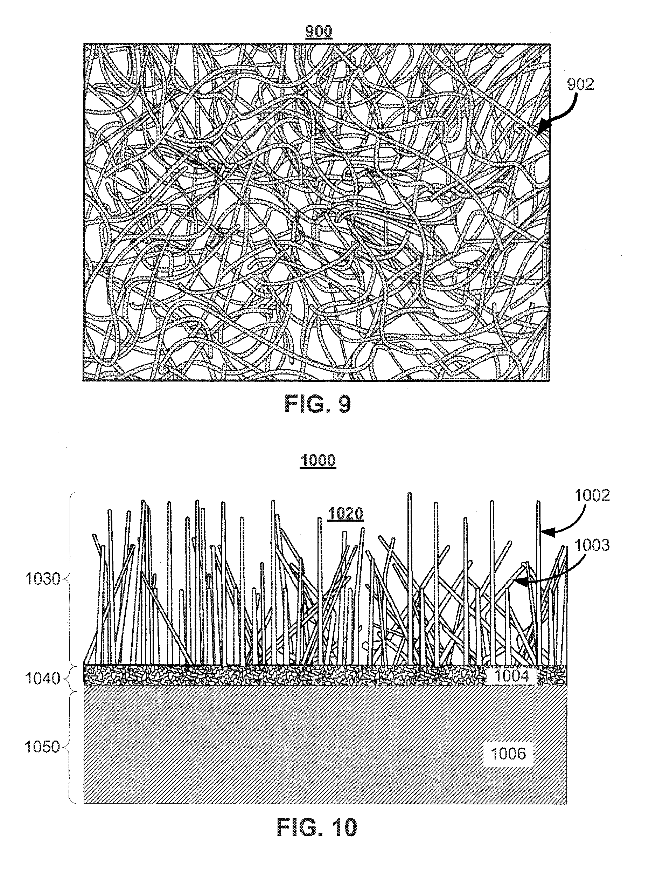

FIG. 9 shows illustrative diagram 900 of nanostructured materials in accordance with some embodiments of the present invention. The array of nanostructured material shown in diagram 900 may include one or more of nanostructured element 902. Nanostructured element 902 may be a nanoparticle (*e.g*., LiFePO₄, LiMnPO₄, LiMnO₂ nanoparticle), nanowire (*e.g*., SiNW, ZnNW, SiC nanowire), single-walled or multi-walled nanotube (*e.g*., CNT), closed fullerene (*e.g*., C60 buckminsterfullerene), any other nanostructured element or any suitable combination thereof. In some embodiments, nanostructured element 902 may be a unit cell of a thin layer of nanostructured material, arranged into an array. For example, in some embodiments, nanostructured element 902 may be one unit cell of a graphene sheet, and a suitable array of these unit cells may collectively be a graphene sheet. One or more nanostructured elements 902 may be arranged in any orientation, or distribution of orientations. An array of nanostructured elements 902 may include elements with any suitable shape and size distribution.

FIG. 10 shows illustrative diagram 1000 of nanostructured materials in accordance with some embodiments of the present invention. Diagram 1000 may include one or more of nanostructured material 1030 (including illustrative nanostructured elements 1002 and 1003), coating 1040 (of coating material 1004), bulk surface 1050 (of bulk material 1006), and environment 1020. In some embodiments, bulk material 1006 may be coated with coating material 1004, which may assist in forming nanostructured elements such as, for example, nanostructured element 1002. In some embodiments, coating material 1004 may act as a catalyst for deposition of nanostructured material 1030. In some embodiments, a coating material may not be used, and nanostructured material 1030 may be deposited directly onto bulk surface 1050.

Nanostructured elements may be arranged in any suitable orientation, or distribution of orientations, as shown by the different orientations of nanostructured elements 1002 and 1003. In some embodiments, plasma-enhanced chemical vapor deposition (CVD) may be used to form nanostructured elements with a particular orientation (*e.g*., normal to the coating surface). In some embodiments, more than one nanostructured material may be deposited, and different nanostructured materials may have different orientations. For example, in some embodiments, SiNWs may be deposited onto a bulk Si surface, substantially normal to the bulk surface. An additional layer of CNTs may then be deposited among the SiNW array, substantially parallel to the bulk surface. Any suitable nanostructured material or combination of nanostructured materials, having any suitable orientations, may be deposited onto coating 1040 or bulk surface 1050.

In some embodiments, environment 1020 may be controlled during deposition of nanostructured material 1030. For example, in some embodiments, environment 1020 may be a reducing gaseous environment that may include hydrocarbons, hydrogen, silanes, inert gases, any other suitable gases or combinations thereof. Gaseous environments may include a precursor material which may deposit onto coating 1040 or bulk surface 1050. In some embodiments, environment 1020 may be a liquid. The liquid may include, for example, suspended nanoparticles, nanowires, nanotubes, or other suitable nanostructured elements which may be deposited (*e.g*., by electrophoresis) onto coating 1040 or bulk surface 1050. In some embodiments, environment 1020 may be a supercritical fluid, which may include a suitable precursor. Environment 1020 may include any suitable environmental conditions (*e.g*., temperature, pressure, composition) controlled by any suitable process schedule (*e.g*., flowrate, ramp times, hold times).

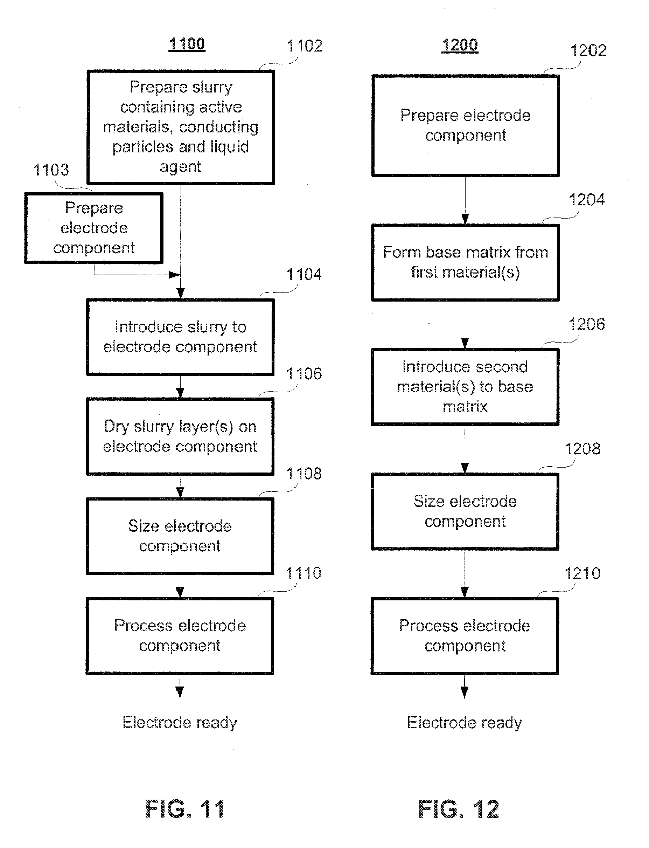

FIG. 11 shows illustrative flow diagram 1100 for forming electrodes in accordance with some embodiments of the present invention. At process step 1102 shown in FIG. 11, a slurry may be prepared including, for example, active materials (*e.g*., SiNWs, LiFePO₄, MH, Ni(OH)₂), electronically conductive particles (*e.g*., CNTs, metal particles), one or more liquid agents (*e.g*., organic solvent, water, alcohol, NMP), binders (*e.g*., PTFE, PVDF), graphitic carbon, amorphous carbon, any other suitable materials, or any suitable combinations thereof. In some embodiments, the active materials may be particles with any suitable shape or size distribution. The electronically conductive particles may have any suitable shape or size distribution. In some embodiments, the electronically conducting particles and the active material particles may not necessarily be of the same size and shape. Process step 1102 may include mixing, blending, stirring, sonicating, ball milling, grinding, sizing (*e.g*., sieving), drying, any other suitable preparation process or any suitable combination thereof. For example, in some embodiments, process step 1102 may entail preparing a slurry including Si particles, carbon particles, an NMP aqueous solution, and PVDF particles to form a slurry. In some embodiments, for example, process step 1102 may entail preparing a slurry including LiFePO₄ particles, carbon particles, an NMP aqueous solution, and PVDF particles to form a slurry. The slurry prepared in accordance with process step 1102 may include any suitable combination of materials.

Process step 1103 may include preparing an electrode component onto which the slurry of process 1102 may be applied. The electrode component may include an electronically conductive substrate, an electronically nonconductive substrate, a metalized foam, any other suitable components, a subassembly of one or more components (*e.g*., metalized foam and substrate subassembly), and any suitable combinations thereof. Process step 1103 may include preparation steps such as cleaning the electrode component, adjusting the surface finish of the electrode component (*e.g*., polishing, roughening), etching the surface of electrode component, adjusting the size or shape of the electrode component (*e.g.,* cutting, grinding, splitting, drilling, machining), any other suitable preparation steps or any suitable combination thereof.

At process step 1104 shown in FIG. 11, the slurry of process step 1102 may be applied to one or more surfaces of the electrode component of process step 1103. Process step 1104 may include doctor-blading, spin coating, screen printing, any other suitable slurry application technique or any suitable combination thereof. In some embodiments one or more molds of any suitable shape may be used to maintain the slurry of process step 1102 in a particular shape on the electrode component of process step 1103. For example, a rectangular prism mold in contact with a substrate may be used to maintain the slurry of process step 1102 in a rectangular prism shape while preventing the slurry of process step 1102 from flowing or otherwise deforming. In some embodiments, the slurry of process step 1102 may be dried prior to application to the electrode component. In some embodiments, a slurry may be tape-cast, dried, sized, any other suitable preparation step and any suitable combination thereof, prior to application to the electrode component. Application of a dried slurry to the electrode component may include bonding, or otherwise adhering the dried slurry to the electrode component.

At process step 1106 shown in FIG. 11, the slurry in contact with the electrode component may be dried (*e.g*., some fraction or substantially all of one or more liquid components may be removed). Drying process 1106 may impart rigidity to the residual components (*e.g*., remaining slurry components). In some embodiments, drying process 1106 may allow for the residual components to maintain shape such that the mold, if used, may be removed. In some embodiments, drying process 1106 may form a gas-filled porous network throughout the dried slurry. In some embodiments, drying process 1106 may include heating, immersing the electrode component and slurry in a prescribed gaseous environment (*e.g*., heated argon), any other suitable drying process or combination thereof. Process step 1106 may be skipped in some embodiments, such as, for example, embodiments in which the slurry is dried prior to application to the electrode component.

The electrode component in contact with the dried slurry of process 1106, may be sized, shaped, or both, in accordance with process step 1108. Process step 1108 may include punching (with any suitable die and press), bending, folding, trimming, shaving, calendering, machining, any other suitable sizing or shaping technique, or any suitable combinations thereof. In some embodiments, process step 1108 may be omitted. For example, in some embodiments the electrode component may be sized or formed as desired at process step 1103, and further sizing or shaping may not be desired at process step 1108.

Process step 1110, as shown in FIG. 11, may include further processing of the electrode component. Process step 1110 may include chemical treatment such as, for example, applying a hydrophobic coating (e.g., PTFE) to the electrode component. Application of a hydrophobic coating may reduce flooding (*e.g*., buildup of liquid water) within the porous electrode. Process step 1110 may include chemical vapor deposition (CVD), physical vapor deposition (PVD), any other deposition technique or any suitable combination thereof, of one or more suitable materials to the surface of the electrode component. In some embodiments, process step 1110 may include, for example, sintering, charging discharging, any other suitable processing or any suitable combination thereof. Process step 1110 may include techniques to adjust the surface properties of the electrode component.

FIG. 12 shows illustrative flow diagram 1200 for forming electrodes in accordance with some embodiments of the present invention. The processes of flow diagram 1200 may include modifying the surface of electrode components, which may increase interface area, electronic conductivity, porosity, any other suitable property or any suitable combination thereof.

Process step 1202, as shown in FIG. 12, may include preparing an electrode component. The electrode component may include an electronically conductive substrate, an electronically nonconductive substrate, a metalized foam, any other suitable components, a subassembly of one or more components (*e.g*., metalized foam and substrate subassembly), and any suitable combinations thereof. Process step 1202 may include preparation steps such as cleaning the electrode component, adjusting the surface finish of the electrode component (*e.g*., polishing, roughening), etching the surface of electrode component, adjusting the size or shape of the electrode component (*e.g*., cutting, grinding, splitting, drilling, machining), any other suitable preparation steps or any suitable combination thereof. In some embodiments, process step 1202 may include coating the surface of the electrode component with a catalyst, deposition substrate, any other suitable material or any suitable combination thereof.

A base matrix may be formed on the surface of the electrode component in accordance with process step 1204, as shown in FIG. 12. The base matrix may be an array of nanostructured material (e.g., CNT array, SiNW array, ZnNW array), which may have, for example, an increased surface area relative to the electrode component without the base matrix. Process step 1204 may include chemical vapor deposition (CVD), plasma-enhanced CVD, physical vapor deposition (PVD), any other suitable deposition technique or any suitable combination thereof, of one or more suitable materials to the surface of the electrode component, thereby forming the base matrix.

A second material may be introduced to the base matrix of the electrode component as shown by process step 1206 of FIG. 12. Process step 1206 may include chemical vapor deposition (CVD), physical vapor deposition (PVD), any other deposition technique or any suitable combination thereof, of one or more suitable materials to the base matrix. The second material may be an active material, an electronically conductive material, a nanostructured material, any other suitable material, and any suitable combinations thereof. For example, in some embodiments, process step 1204 may include depositing an array of CNTs onto an electrode component, and process step 1206 may include depositing an array of SiNWs onto the base matrix of CNTs. In some embodiments, for example, process step 1204 may include depositing an array of SiNWs onto an electrode component, and process step 1206 may include depositing an array of CNTs on the base matrix of SiNWs.

The electrode component may be sized, shaped, or both, in accordance with process step 1208, as shown in FIG. 12. Process step 1208 may include punching (with any suitable die and press), bending, folding, trimming, shaving, calendering, machining, any other suitable sizing or shaping technique, or any suitable combinations thereof. In some embodiments, process step 1208 may be not be included. For example, in some embodiments the electrode component may be sized or formed as desired at process step 1202, and further sizing or shaping may not be desired at process step 1208.

Process step 1210, as shown in FIG. 12, may include further processing of the electrode component. Process step 1210 may include chemical treatment such as, for example, applying a hydrophobic coating (e.g., PTFE) to the electrode component. Application of a hydrophobic coating may reduce flooding (*e.g*., buildup of liquid water) within the porous electrode. Process step 1210 may include chemical vapor deposition (CVD), physical vapor deposition (PVD), any other deposition technique or any suitable combination thereof, of one or more suitable materials onto the surface of the electrode component. Process step 1210 may include techniques to adjust the surface properties of the electrode component. In some embodiments, process step 1210 may include sintering, charging, discharging, any other suitable processing technique, and any suitable combination thereof applied to the electrode component.

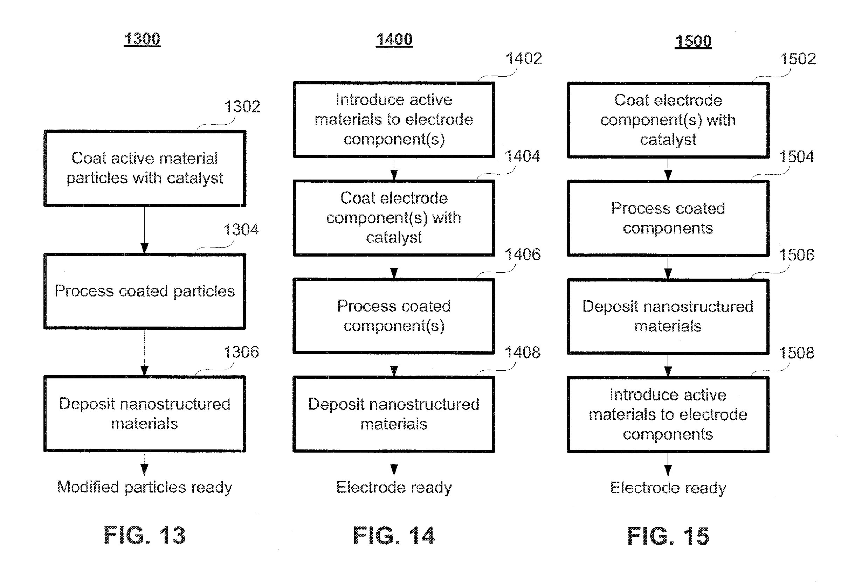

FIG. 13 shows illustrative flow diagram 1300 for modifying active particles in accordance with some embodiments of the present invention. Active material particles may be coated with a material at process step 1302 of FIG. 13. Any suitable active material may be coated, including both negative electrode active materials and positive electrode active materials. Process step 1302 may include coating the active material particles with a material such as, for example, nickel (Ni), iron (Fe), aluminum (Al), alumina (Al₂O₃), manganese salts, magnesium salts, Si, any other suitable material or any suitable combination thereof, to aide in forming nanostructures on the active material particles. The coating material may be dissolved in a liquid solution, which may be applied to the active material particles. The liquid solution may be any suitable liquid such as, for example, an acid solution. Process step 1302 may include immersion, electroplating, electroless plating, electrophoresis, sputtering, atomic layer deposition, chemical solution deposition (*e.g*., sol-gel process), CVD, PVD, any other suitable coating technique or any suitable combination thereof. In some embodiments, process step 1302 may not be used. For example, in some embodiments, the active material particles may be Si particles, and no coating may be desired. In some embodiments, the active material particles may be Si particles, and a coating material of CNTs may be desired. The active material particles and coating material may include any suitable material or combination of materials. Process step 1302 may include sizing, cleaning, etching, or other processing technique to prepare active material particles for application of the coating material.

Coated particles may be processed at process step 1304. Process step 1304 may include sizing (*e.g*., sieving), sintering, annealing, agglomerating, drying, any other suitable processing technique or any suitable combination thereof. For example, in some embodiments, coated particles may be heated in a prescribed gaseous environment (*e.g*., inert, reducing) to improve durability, improve adherence, increase coating material grain size, any other suitable coating property or any suitable combinations thereof.

Nanostructured materials may be deposited onto coated particles in accordance with process step 1306. Process step 1306 may include CVD, plasma-enhanced CVD, PVD, any other suitable technique for depositing nanostructured materials or any suitable combination thereof. Process step 1306 may include placing the coated particles in a deposition chamber, controlling the environment of the coated particles (*e.g*., maintaining a reducing environment), heating the coated particles, any other suitable technique for depositing a nanostructured material onto particles or any suitable combination thereof. Process step 1306 may include providing a gas phase precursor to the deposition chamber. The gas phase precursor may include, for example, a hydrocarbon, carbon monoxide, silane, any other suitable precursor or any suitable combination thereof. The gas phase precursor may be combined with any suitable gaseous material such as, for example, hydrogen, inert species (e.g., helium), any other suitable gas species or any suitable combination thereof. For example, in some embodiments, a gas mixture of hydrogen and one or more hydrocarbons may be introduced to particles in a deposition chamber, which may be maintained between 300 and 1200 degrees centigrade. In some embodiments, the precursor may be a solid phase material that may undergo thermal, laser, or other suitable treatment, or combinations thereof, to release material into the vapor phase. In some embodiments, the precursor material may be included in solution such as, for example, a supercritical mixture. In some embodiments, a suspension (*e.g*., solid particles in a liquid medium) including nanostructured material may be applied to coated particles to deposit nanostructured material onto the coated particles. For example, in some embodiments, electrophoresis may be used to apply nanostructured materials contained in a solution to the coated particles. Any suitable precursor, additional material, deposition temperature (*e.g*., ramp temperature, soak temperature), deposition pressure, other process control and any suitable combination thereof, may be used to deposit nanostructured materials onto particles.

In some embodiments, particles resulting from process step 1306 may have modified properties such as, for example, composition, electronic conductivity, thermal conductivity, surface area, surface morphology, size, any other suitable modified property or any combination thereof. In some embodiments, the modified particles resulting from process step 1306 may be used as active material particles in the slurry of process step 1102 of FIG. 11.

In some embodiments, all or some of the techniques of flow diagram 1300 may be repeated in any order to form more than one array of nanostructured materials on active material particles. Any suitable combination of active materials, coatings, nanostructured materials, other suitable materials or combination thereof may be used in accordance with the techniques of flow diagram 1300.

FIG. 14 shows illustrative flow diagram 1400 for forming electrodes in accordance with some embodiments of the present invention. Process step 1402 may include introducing active materials to electrode components. Any suitable active material may be introduced to the electrode component, including negative electrode active materials, positive electrode active materials, or both (*e.g*., BPU). The electrode component may include an electronically conductive substrate, an electronically nonconductive substrate, a metalized foam, any other suitable components, a subassembly of one or more components (*e.g*., metalized foam and substrate subassembly), and any suitable combinations thereof. In some embodiments, the active material may be applied to the electrode component as a slurry (*e.g*., the process described in flow diagram 1100 of FIG. 11). In some embodiments, the active material may be applied to the electrode component as a nanostructured material. For example, process step 1402 may include CVD, plasma-enhanced CVD, PVD, any other suitable technique for depositing nanostructured materials or any suitable combination thereof. Process step 1402 may include cleaning, etching, sintering, any other preparation technique or any suitable combination thereof, for introducing an active material to an electrode component.

The electrode component may be coated with a material at process step 1404 of FIG. 14. Process step 1404 may include coating the electrode component with a material such as, for example, Ni, Fe, Al, Al₂O₃, manganese salts, magnesium salts, Si, any other suitable material or any suitable combination thereof, to aide in forming nanostructures on the electrode component. The coating material may be dissolved in a liquid solution, which may be applied to the active material particles. The liquid solution may be any suitable liquid. Process step 1404 may include immersion, electroplating, electroless plating, electrophoresis, sputtering, atomic layer deposition, chemical solution deposition (*e.g*., sol-gel process), CVD, PVD, any other suitable coating technique or any suitable combination thereof. In some embodiments, process step 1404 may not be used. The electrode component, active material, and coating material may include any suitable material or combination of materials. Process step 1404 may include sizing, cleaning, etching, or other processing technique to prepare the electrode component for application of the coating material.

The coated electrode component may be processed at process step 1406. Process step 1406 may include sintering, annealing, drying, any other suitable processing technique or any suitable combination thereof. For example, in some embodiments, the coated electrode component may be heated in a prescribed gaseous environment (*e.g*., inert, reducing) to improve durability, improve adherence, increase coating material grain size, any other suitable coating property or any suitable combinations thereof.

Nanostructured materials may be deposited onto the coated electrode component in accordance with process step 1408. Process step 1408 may include CVD, plasma-enhanced CVD, PVD, any other suitable technique for depositing nanostructured materials or any suitable combination thereof. Process step 1408 may include placing the electrode component in a deposition chamber, controlling the environment of the coated electrode component (*e.g*., maintaining a reducing environment), heating the coated electrode component, any other suitable technique for depositing a nanostructured material onto the electrode component or any suitable combination thereof. Process step 1408 may include providing a gas phase precursor to the deposition chamber. The gas phase precursor may include, for example, a hydrocarbon, carbon monoxide, silane, any other suitable precursor or any suitable combination thereof. The gas phase precursor may be combined with any suitable gaseous material such as, for example, hydrogen, inert species (*e.g*., helium), any other suitable gas species or any suitable combination thereof. For example, in some embodiments, a gas mixture of hydrogen and one or more hydrocarbons may be introduced to the coated electrode component in a deposition chamber, which may be maintained between 300 and 1200 degrees centigrade. In some embodiments, the precursor may be a solid phase material that may undergo thermal, laser, or other suitable treatment, or combinations thereof, to release material into the vapor phase. In some embodiments, the precursor material may be included in solution such as, for example, a supercritical mixture. In some embodiments, a suspension (*e.g*., solid particles in a liquid medium) including nanostructured material may be applied to a coated electrode component to deposit nanostructured material onto the coated electrode component. For example, in some embodiments, electrophoresis may be used to apply nanostructured materials contained in a solution to an electrode component. Any suitable precursor, additional material, deposition temperature (*e.g*., ramp temperature, soak temperature), deposition pressure, other process control and any suitable combination thereof, may be used to deposit nanostructured materials onto an electrode component.

The modified component that may result from process step 1408 may include an electronically conductive network (*e.g*., metalized foam, CNT array), an active material, a current collector (*e.g*., substrate, tab), any other suitable component or any suitable combination thereof. The modified component that may result from process step 1408 may be termed an electrode, BPU, MPU, electrode subassembly, or any other suitable designation.

For example, in some embodiments, an active material including metal hydrides (MHs) may be introduced to an electrode component including a Ni foam and an electronically conductive substrate, in accordance with process step 1402. The active material may be included in a slurry which is applied to the electrode component (*e.g*., the slurry described in process step 1102 of FIG. 11). The active material and electrode component may be sintered in accordance with process step 1402. The electrode component and MH may be coated with a catalyst material in accordance with process step 1404. The catalyst material coating may be dried and sintered in accordance with process step 1406. The coated electrode component and MH may be placed in a CVD oven, and a hydrocarbon/hydrogen gaseous precursor may be introduced to the CVD oven at a temperature between 300 and 1600 degrees centigrade. An array of CNT may be deposited onto the coated electrode component and MH at process step 1408. The array of CNTs may modify one or more properties of the electrode component, including, for example, electronic conductivity, thermal conductivity, surface area, any other suitable property or any combination thereof. This exemplary process in accordance with flow diagram 1400 is illustrative and is meant to illustrate some embodiments of the present invention, and not to limit the scope of the present invention.

FIG. 15 shows illustrative flow diagram 1500 for forming electrodes in accordance with some embodiments of the present invention. An electrode component may be coated with a material at process step 1502 of FIG. 15. In some embodiments, process step 1502 may correspond to process step 1404 of FIG. 14. Process step 1502 may include coating the electrode component with a material such as, for example, Ni, Fe, Al, Al₂O₃, manganese salts, magnesium salts, Si, any other suitable material or any suitable combination thereof, to aide in forming nanostructures on the electrode component. The coating material may be dissolved in a liquid solution, which may be applied to the active material particles. The liquid solution may be any suitable liquid. Process step 1502 may include immersion, electroplating, electroless plating, electrophoresis, sputtering, atomic layer deposition, chemical solution deposition (*e.g*., sol-gel process), CVD, PVD, any other suitable coating technique or any suitable combination thereof. In some embodiments, process step 1502 may not be used. The electrode component, active material, and coating material may include any suitable material or combination of materials. Process step 1502 may include sizing, cleaning, etching, or other processing technique to prepare the electrode component for application of the coating material.

The coated electrode component may be processed at process step 1504. Process step 1504 may include sintering, annealing, drying, any other suitable processing technique or any suitable combination thereof. For example, in some embodiments, the coated electrode component may be heated in a prescribed gaseous environment (*e.g*., inert, reducing) to improve durability, improve adherence, increase coating material grain size, any other suitable coating property or any suitable combinations thereof.

Nanostructured materials may be deposited onto the coated electrode component in accordance with process step 1506. In some embodiments, process step 1506 may correspond to process step 1408 of FIG. 14. Process step 1506 may include CVD, plasma-enhanced CVD, PVD, electrophoresis, any other suitable technique for depositing nanostructured materials or any suitable combination thereof. Process step 1506 may include placing the electrode component in a deposition chamber, controlling the environment of the coated electrode component, heating the coated electrode component, ablating a solid phase precursor, thermally treating a solid phase precursor, any other suitable technique for depositing a nanostructured material onto the electrode component or any suitable combination thereof. Process step 1506 may include providing a gas phase precursor to the deposition chamber, a solid phase precursor, or a precursor that may be included in solution. Any suitable precursor, additional material, deposition temperature (*e.g*., ramp temperature, soak temperature), deposition pressure, other process control and any suitable combination thereof, may be used to deposit nanostructured materials onto an electrode component.

Process step 1508 may include introducing active materials to a modified electrode component. In some embodiments, process step 1508 may correspond to process step 1402 of FIG. 14. Any suitable active material may be introduced to the electrode component, including negative electrode active materials, positive electrode active materials, or both (*e.g*., BPU). The electrode component may include an electronically conductive substrate, an electronically nonconductive substrate, a metalized foam, any other suitable components, a subassembly of one or more components (*e.g*., metalized foam and substrate subassembly), and any suitable combinations thereof. In some embodiments, the active material may be applied to the electrode component as a slurry (*e.g*., the process described in flow diagram 1100 of FIG. 11). In some embodiments, the active material may be applied to the electrode component as a nanostructured material. For example, process step 1508 may include CVD, plasma-enhanced CVD, PVD, any other suitable technique for depositing nanostructured materials or any suitable combination thereof. Process step 1508 may include cleaning, etching, sintering, any other preparation technique or any suitable combination thereof, for introducing an active material to an electrode component.

For example, in some embodiments, one or more surfaces of an electrode component including a Ni foam rigidly affixed to an electronically conductive substrate may be coated with a catalyst in accordance with process step 1502. The coated electrode component may be sintered in accordance with process step 1504. The coated electrode component may be placed in a CVD oven, and a hydrocarbon/hydrogen precursor may be introduced to the CVD oven at a temperature between 600 and 1200 degrees centigrade. An array of CNTs may be deposited onto the coated electrode component at process step 1506. An active material including, for example, Ni(OH)₂ may be added to the modified electrode component as a slurry (*e.g*., the slurry described in process step 1102 of FIG. 11), which may be dried in accordance with process step 1508. The array of CNTs may provide a base matrix (*e.g*., as described in process step 1204 of FIG. 12) for application of the active material (*e.g*., Ni(OH)₂). This exemplary process in accordance with flow diagram 1500 is illustrative and is meant to illustrate some embodiments of the present invention, and not to limit the scope of the present invention.

It will be understood that the steps of flow diagrams 1100-1500 of FIGS. 11-15 are illustrative. Any of the steps of flow diagrams 1100-1500 may be modified, omitted, rearranged, combined with other steps of flow diagrams 1100-1500, or supplemented with additional steps, without departing from the scope of the present invention.

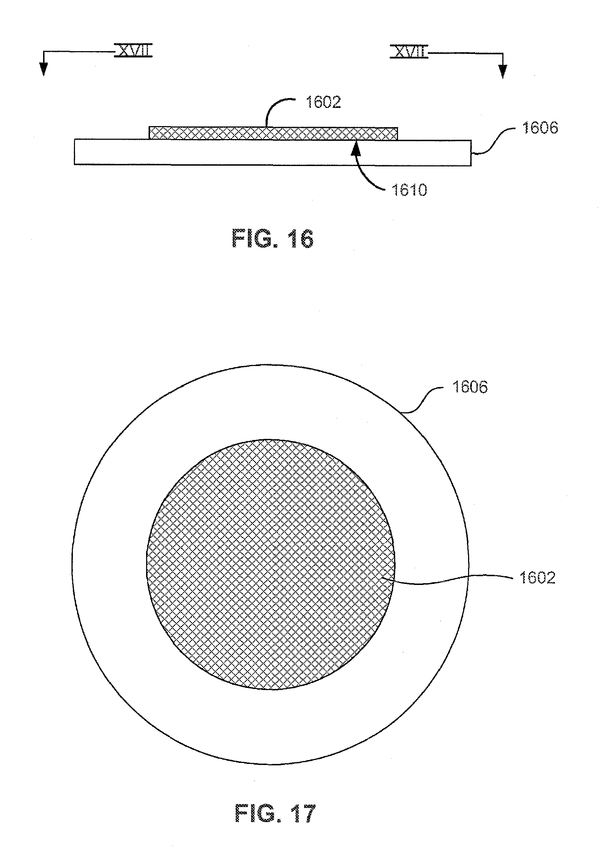

An illustrative process for making an electrode structure in accordance with some embodiments of the present invention will be discussed further in the context of FIGS. 16 and 17.

FIG. 16 shows an illustrative side elevation view of slurry 1602 in contact with substrate 1606 in accordance with some embodiments of the present invention. Shown in FIG. 17 is an illustrative top plan view of the elements of FIG. 16, taken from line XVII-XVII of FIG. 16 in accordance with some embodiments of the present invention. Slurry 1602 is shown in contact with substrate 1606 at interface 1610. Substrate 1606 and slurry 1602 may have any suitable shape, cross-section shape, curvature (*e.g*., dome shaped), thickness (of either layer 1606 and 1602), relative size (among substrate and composite material), relative thickness (among substrate and composite material), any other property or any suitable combinations thereof. In some embodiments, slurry 1602 may include the slurry discussed above in process steps 1102 and 1104 of FIG. 11. In some embodiments, slurry 1602 may include the dried slurry discussed above in process step 1106 of FIG. 11. Slurry 1602 may include any material or suitable combination of materials.

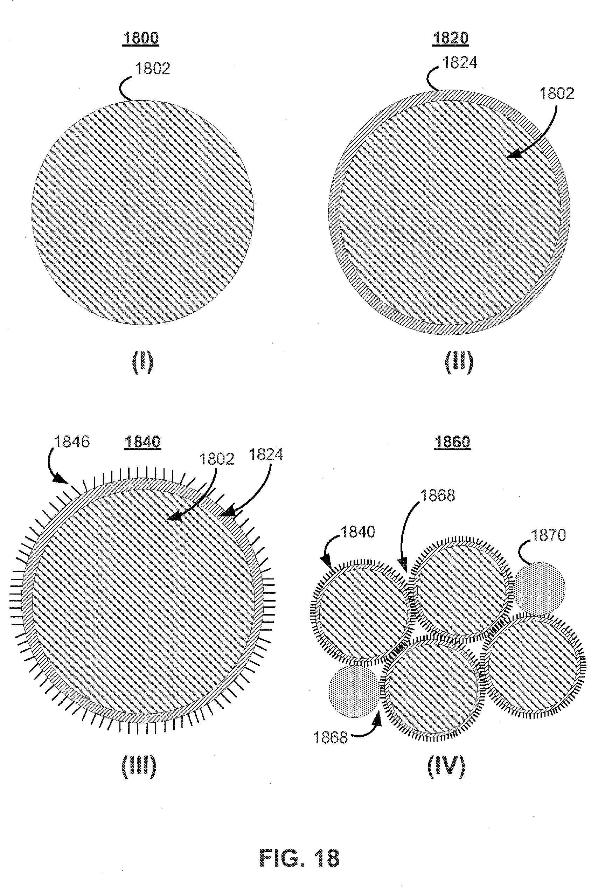

FIG. 18 shows illustrative processes for modifying particles in accordance with some embodiments of the present invention. Illustrative particle 1800 may include active material 1802 as shown in FIG. 18(I). Active material 1802 may be positive active material, any other suitable materials or any combinations thereof, or active material 1802 may be negative active material, any other suitable materials or any combinations thereof. Although shown illustratively as spherical, particle 1800 may have any suitable shape or size, or both, and may belong to and be representative of a collection of active material particles having any suitable size and shape distribution. In some embodiments, particle 1800 may be porous, nonporous, cenospherical (*e.g*., hollow), any other morphological designation, or any suitable combination thereof.

Coating material 1824 may be introduced to particle 1800 (e.g., by process 1302 of FIG. 13), forming coated particle 1820, as shown in FIG. 18(II). Coated active material 1802 may correspond substantially to active material 1802. Coating material 1824 may include Fe, Al, Al₂O₃, manganese salts, magnesium salts, Si, any other suitable material or any suitable combination thereof, to aide in forming nanostructures on the coated particles. In some embodiments, coating material 1824 may cover substantially all of the surface of active material 1822. In some embodiments coating material 1824 may cover part of the surface of active material 1802. The coating formed by coating material 1824 may be contiguous or non-contiguous. The layer of coating material 1824 may be any suitable thickness.

Nanostructured material 1846 may be deposited onto the surface of coated particle 1820, to form modified particle 1840 (*e.g*., as described by process step 1306 of FIG. 13), as shown in FIG. 18(III). Nanostructured material 1846 resides on coating material 1824 which may partially or substantially fully coat the surface of active material 1802. Nanostructured material 1846 may be any suitable material or combination of materials, and may have any suitable orientation or distribution of orientations. For example, in some embodiments, nanostructured material 1846 may include an array of CNTs arranged substantially parallel to the surface of coating material 1824. In some embodiments, for example, nanostructured material 1846 may include an array of ZnNWs arranged substantially normal to the surface of coating material 1824. In some embodiments, nanostructured material 1846 may include more than one material. For example, in some embodiments, an array of SiNWs may be deposited on coating material 1824, and an array of CNTs may be deposited on top of the array of SiNWs. Any suitable number of nanostructured materials, arrays of nanostructured materials, layers, or suitable combinations thereof may be deposited onto particle 1820 in any suitable order to form modified particle 1840.

Modified particle 1840 may be combined with other modified particles, other particles or both, as shown by modified particle collection 1860 in FIG. 18(IV). Modified particle collection 1860 may include modified particles 1840 and particles 1870, which may include, for example, polymer particles, active material particles, electronically conductive particles (*e.g*., metal particles, CNTs), any other suitable particles or any suitable combinations thereof. Modified particle collection 1860 may be a slurry, and may include a liquid agent (not shown in FIG. 18). Modified particle collection 1860 may have modified properties relative to a collection of non-modified particles such as, for example, increased electronic conductivity, increased thermal conductivity, increased surface area, increased inter-particle contact area (*e.g*., contact area 1868 of FIG. 18), any other suitable property or combination thereof. Modified particle collection 1860 may be included in the slurry of flow diagram 1100 of FIG. 11.

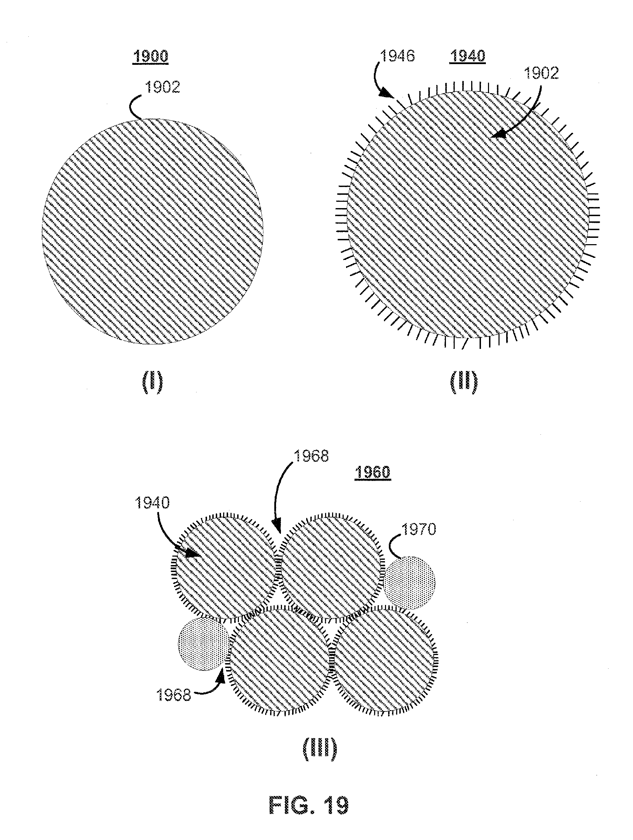

FIG. 19 shows illustrative processes for modifying particles in accordance with some embodiments of the present invention. Illustrative particle 1900 includes active material 1902 as shown in FIG. 19(I). Active material 1902 may be any suitable positive active material or negative active material, or any suitable combination of materials thereof. Although shown illustratively as spherical, particle 1900 may have any suitable shape and size, or both, and may belong to and be representative of a collection of active material particles having any suitable size and shape distribution. In some embodiments, particle 1900 may be porous, nonporous, cenospherical (*e.g*., hollow), any other morphological designation, or any suitable combination thereof.

Nanostructured material 1946 may be deposited onto the surface of active material particle 1900, to form modified particle 1940 (*e.g.,* as described by process step 1306 of FIG. 13), as shown in FIG. 19(II). Nanostructured material 1946 may reside on the surface of active material 1902. Nanostructured material 1946 may be any suitable material or combination of materials, and may have any suitable orientation or distribution of orientations. For example, in some embodiments, nanostructured material 1946 may include an array of CNTs arranged substantially parallel to the surface of active material 1902. In some embodiments, for example, nanostructured material 1946 may include an array of SiNWs arranged substantially normal to the surface of active material 1902. In some embodiments, nanostructured material 1946 may include more than one material. For example, in some embodiments, an array of ZnNWs may be deposited on active material 1902, and an array of CNTs may be deposited on top of the array of ZnNWs. Any suitable number of nanostructured materials, arrays of nanostructured materials, layers, or suitable combinations thereof may be deposited onto particle 1900 in any suitable order to form modified particle 1940.

Modified particle 1940 may be combined with other modified particles, other particles or both, as shown by modified particle collection 1960 in FIG. 19(III). Modified particle collection 1960 may include modified particles 1940 and particles 1970, which may include, for example, polymer particles, active material particles, electronically conductive particles (*e.g*., metal particles, CNTs), any other suitable particles or any suitable combinations thereof. Modified particle collection 1960 may be a slurry, and may include a liquid agent (not shown in FIG. 19). Modified particle collection 1960 may have modified properties relative to a collection of non-modified particles such as, for example, increased electronic conductivity, increased thermal conductivity, increased surface area, increased inter-particle contact area (*e.g*., contact area 1968 of FIG. 19), any other suitable property or combination thereof. Modified particle collection 1960 may be included in the slurry of flow diagram 1100 of FIG. 11.

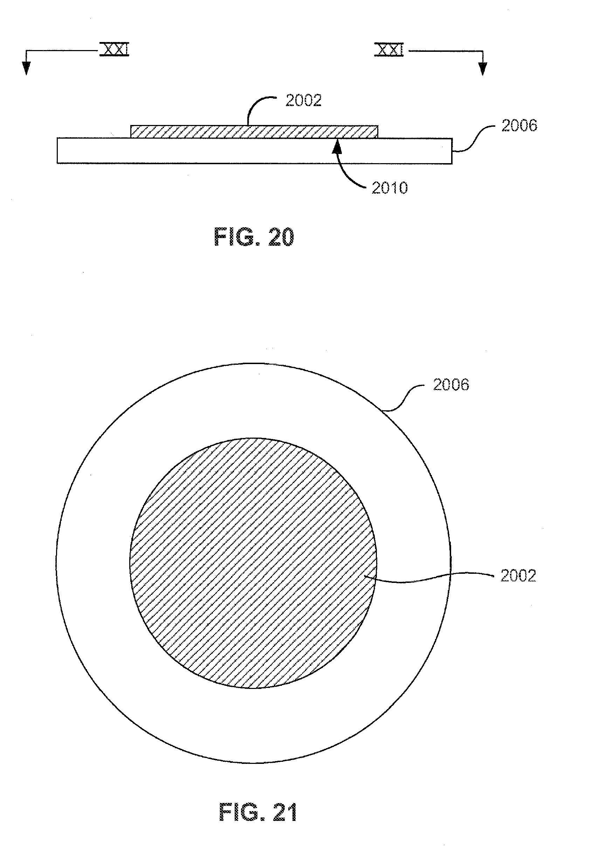

FIG. 20 shows an illustrative side elevation view of electrode component 2002 in contact with substrate 2006 in accordance with some embodiments of the present invention. Shown in FIG. 21 is an illustrative top plan view of the elements of FIG. 20, taken from line XXI-XXI of FIG. 20 in accordance with some embodiments of the present invention. Electrode component 2002 is shown in contact with substrate 2006 at interface 2010. Substrate 2006 and electrode component 2002 may have any suitable shape, cross-section shape, curvature (*e.g*., dome shaped), thickness (of either layer 2006 and 2002), relative size (among substrate and composite material), relative thickness (among substrate and composite material), any other property or any suitable combinations thereof. In some embodiments, electrode component 2002 may include the slurry discussed above in process steps 1102 and 1104 of FIG. 11. In some embodiments, electrode component 2002 may include the dried slurry discussed above in process step 1106 of FIG. 11. Electrode component 2002 may include any other suitable material, or any suitable combination of materials.

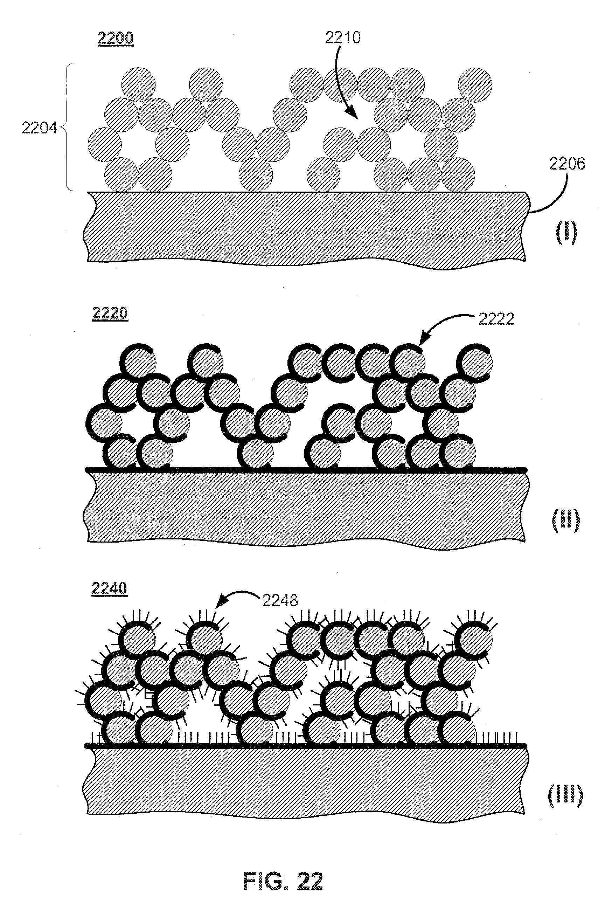

FIG. 22 shows several illustrative partial cross-sectional views of an electrode component in accordance with some embodiments of the present invention. FIG. 22(I) shows a close-up view of illustrative electrode component 2200 which may be a subassembly which may include metalized foam 2204 and substrate 2206. Metalized foam 2204 may include pore network 2210, which may impart porosity. In some embodiments, electrode component 2200 may correspond substantially to the electrode component of flow diagrams 1100 of FIG. 11, 1200 of FIG. 12, 1400 of FIG. 14 or 1500 of FIG. 15. In this illustrative example, FIG. 22(I) may show the interface region between metalized foam 2204 and substrate 2206 for convenience.

FIG. 22(II) shows a close-up view of illustrative coated electrode component 2220, which may be a subassembly which may include metalized foam 2204 and substrate 2206. Coating 2222 may cover some surfaces of electrode component 2200, forming coated electrode component 2220. Coating 2222 may include any suitable material such as, for example, Fe, Al, Al₂O₃, manganese salts, magnesium salts, Si, any other suitable material or any suitable combination thereof, to aide in forming nanostructures on the active material particles. Coating 2222 may correspond substantially to the coating of flow diagrams 1400 of FIG. 14 or 1500 of FIG. 15. As shown in illustrative FIG. 22(II), coating 2202 may coat more than one surface, including both exterior (*e.g*., boundary) and interior (*e.g*., surfaces along pore network 2210) surfaces.

FIG. 22(III) shows a close-up view of illustrative modified electrode component 2240, which may include coated electrode component 2220. Nanostructured material 2248 may be deposited on some surfaces of coated electrode component 2220, forming modified electrode component 2240. The deposition of nanostructured material 2248 may correspond substantially to the deposition steps discussed in flow diagrams 1300 of FIG. 13, flow diagrams 1400 of FIG. 14 or 1500 of FIG. 15. Nanostructured material 2248 may include any suitable type of nanostructured elements including, for example, nanoparticles, nanowires, single-walled or multi-walled nanotubes, closed fullerenes, any other suitable nanostructured elements, any suitable nanostructured composite elements or any suitable combinations or arrays thereof. Although shown as being substantially normal to the surfaces of coated electrode component 2220, nanostructured material 2248 may include nanostructured elements having any suitable size, shape, orientation distributions. It will also be understood that an illustrative, schematic two dimensional section representation of a three dimensional porous solid, such as that shown by FIG. 22, may not show some connectivity of the solid (or pores) but that connectivity may nonetheless exist.

The invention further relates to the following numbered items:
1. A method for forming an electrode, the method comprising:
   combining active material particles, electronically conductive particles, and a liquid agent to form a slurry, wherein at least one of the active material particles and the electronically conductive particles comprises a nanostructured material;
   placing in contact the slurry with an electrode component; and
   drying the slurry to form the electrode.
2. The method of item 1, wherein the nanostructured material comprises silicon nanowires.
3. The method of item 1, wherein the active material particles comprise lithium iron phosphate (LiFePO₄) particles.
4. The method of item 1, wherein the nanostructured material comprises carbon nanotubes.
5. A method comprising:
   introducing a coating material to the surface of active material particles to form coated particles; and
   depositing a nanostructured material from a vapor-phase precursor onto the surface of the coated particles to form modified particles, wherein the coating material acts as a catalyst for deposition of the nanostructured material.
6. The method of item 5, further comprising:
   combining the modified particles, an electronically conductive material, and a liquid agent and form a slurry;
   placing in contact the slurry with an electrode component; and
   drying the slurry to form an electrode.
7. The method of item 5, wherein the nanostructured material comprises carbon nanotubes.
8. The method of item 5, wherein the nanostructured material comprises silicon nanowires.
9. The method of item 5, wherein the vapor-phase precursor comprises a hydrocarbon.
10. The method of item 5, wherein the vapcr-phase precursor comprises silane.
11. A method comprising:
   introducing a coating material to one or more surfaces of an electrode component; and
   depositing a nanostructured material from a vapor-phase precursor onto the one or more surfaces of the electrode component, wherein the coating material acts as a catalyst for deposition of the nanostructured material.
12. The method of item 11, wherein the second nanostructured material comprises carbon nanotubes.
13. The method of item 11, wherein the second nanostructured material comprises silicon nanowires.
14. The method of item 11, wherein the electrode component comprises an electronically conductive foam.
15. The method of item 11, wherein the electrode component comprises an electronically conductive substrate.
16. The method of item 11, wherein the electrode component comprises an active material.
17. The method of item 11, wherein the vapor-phase precursor comprises a hydrocarbon.
18. The method of item 11, wherein the vapor-phase precursor comprises silanes.
19. An electrode formed by a method comprising:
   introducing a coating material to one or more surfaces of an electrode component; and
   depositing a nanostructured material from a vapor-phase precursor onto the one or more surfaces of the electrode component, wherein the coating material acts as a catalyst for deposition of the nanostructured material.
20. The electrode of item 19, wherein the method further comprises introducing an active material to the electrode component.
21. An electrode formed by a method comprising:
   introducing a coating material to the surface of active material particles to form coated particles;
   depositing a nanostructured material from a vapor-phase precursor onto the surface of the coated particles to form modified particles, wherein the coating material acts as a catalyst for deposition of the nanostructured material;
   combining the modified particles, an electronically conductive material, and a liquid agent and form a slurry;
   placing in contact the slurry with an electrode component; and
   drying the slurry to form a substantially solid layer in contact with the electrode component.
22. An electrode comprising:
   an impermeable, electronically conductive substrate;
   an electronically conductive network provided on one side of the electronically conductive substrate; and
   an active material in contact with the electronically conductive network, wherein at least one of the active material and the electronically conductive network comprises a nanostructured material.

It will be understood that the foregoing is only illustrative of the principles of the invention, and that various modifications may be made by those skilled in the art without departing from the scope and spirit of the invention. It will also be understood that various directional and orientational terms such as "horizontal" and "vertical," "top" and "bottom" and "side," "length" and "width" and "height" and "thickness," "inner" and "outer," "internal" and "external," and the like are used herein only for convenience, and that no fixed or absolute directional or orientational limitations are intended by the use of these words. For example, the devices of this invention, as well as their individual components, may have any desired orientation. If reoriented, different directional or orientational terms may need to be used in their description, but that will not alter their fundamental nature as within the scope and spirit of this invention. Those skilled in the art will appreciate that the invention may be practiced by other than the described embodiments, which are presented for purposes of illustration rather than of limitation, and the invention is limited only by the claims that follow.

## Claims

1. A method comprising:
introducing a coating material to the surface of active material particles to form coated particles; and
depositing a nanostructured material from a vapor-phase precursor onto the surface of the coated particles to form modified particles, wherein the coating material acts as a catalyst for deposition of the nanostructured material.

2. The method of claim 1, further comprising:
combining the modified particles, an electronically conductive material, and a liquid agent to form a slurry;
placing in contact the slurry with an electrode component; and
drying the slurry to form an electrode.

3. The method of claim 1 or 2, wherein the nanostructured material comprises at least one of carbon nanotubes and silicon nanowires.

4. The method of any of claims 1-3, wherein the vapor-phase precursor comprises at least one of a hydrocarbon and silane.

5. A method comprising:
introducing a coating material to one or more surfaces of an electrode component; and
depositing a nanostructured material from a vapor-phase precursor onto the one or more surfaces of the electrode component, wherein the coating material acts as a catalyst for deposition of the nanostructured material.

6. The method of claim 5, wherein the nanostructured material comprises at least one of carbon nanotubes and silicon nanowires.

7. The method of claim 5 or 6, wherein the electrode component comprises an electronically conductive foam.

8. The method of any of claims 5-7, wherein the electrode component comprises an electronically conductive substrate.

9. The method of any of claims 5-8, wherein the electrode component comprises an active material.

10. The method of any of claims 5-9, wherein the vapor-phase precursor comprises at least one of a hydrocarbon and silane.

11. An electrode comprising:
an electronically conductive electrode component;
a coating material on one or more surfaces of the electrode component; and
a nanostructured material deposited from a vapor-phase precursor onto the one or more surfaces of the electrode component, wherein the coating material acts as a catalyst for deposition of the nanostructured material.

12. The electrode of claim 11, wherein the electrode comprises an active material on the electrode component.

13. The electrode of claim 11 or 12, wherein the nanostructured material is formed outward in an orientation substantially normal to the coating material on the one or more surfaces of the electrode component.

14. An electrode comprising:
an electronically conductive electrode component;
active material particles in contact with the electrode component, wherein a coating material on the surface of the active material particles form coated particles; and
a nanostructured material from a vapor-phase precursor on the surface of the coated particles to form modified particles, wherein the coating material acts as a catalyst for deposition of the nanostructured material.

15. The electrode of claim 14, wherein the nanostructured material is formed outward in an orientation substantially normal to the coating material on the surface of the active material particles.
